# EUROPEAN PATENT APPLICATION

(11) **EP 4 797 831 A1**
(43) Date of publication of application: **26.08.2026**
(21) Application number: 24884128.0
(22) Date of filing: 14.08.2024
(51) Int. Cl.: H04W 72/044

(54) **COMMUNICATION METHOD, COMMUNICATION DEVICE, MEDIUM, AND PROGRAM PRODUCT**

(30) Priority: 31.10.2023 CN 202311438201
(71) Applicant: HUAWEI TECHNOLOGIES CO., LTD., Shenzhen 518129 (CN)
(72) Inventor: WEI, Dongdong, Shenzhen, Guangdong 518129 (CN); TANG, Hao, Shenzhen, Guangdong 518129 (CN); MA, Jianglei, Shenzhen, Guangdong 518129 (CN); ZHANG, Liqing, Shenzhen, Guangdong 518129 (CN)
(74) Representative: Epping - Hermann - Fischer
(86) International application number: PCT/CN2024/112009
(87) International publication number: WO 2025/092121

(57) **Abstract**

A communication method, a communication device, a computer-readable storage medium, and a computer program product are disclosed. In the method, a terminal device receives a trigger signal, where the trigger signal is used to trigger the terminal device to send assistance information to a network device. The terminal device sends the assistance information in response to receiving the trigger signal, where the assistance information indicates at least one beam in a plurality of beams of the network device, and the terminal device is in an idle state or an inactive state. In this manner, the terminal device completes feedback in a non-connected state, so that the assistance information required by a network side is sent while reducing additional energy consumption of the terminal device as much as possible. This helps reduce energy consumption after the network obtains coverage of the terminal in each beam.

## Description

This application claims priority to Chinese Patent Application No. 202311438201.5, filed with the China National Intellectual Property Administration on October 31, 2023 and entitled "COMMUNICATION METHOD, COMMUNICATION DEVICE, MEDIUM, AND PROGRAM PRODUCT", which is incorporated herein by reference in its entirety.

### TECHNICAL FIELD

This disclosure relates to the communication field, and more specifically, to a communication method, a communication device, a computer-readable storage medium, and a computer program product.

### BACKGROUND

In 5G and 6G eras, a quantity of antennas on a base station side increases significantly with large-scale commercial use of active antenna units (Active Antenna System, AAU). Compared with that in 3G and 4G eras, energy consumption of base stations increases exponentially. In addition, in the 5G and 6G eras, more transmission bandwidths are required due to a demand for higher data rates and heavier traffic. This increases energy consumption on the base station side accordingly. Use of millimeter waves and terahertz leads to dense site deployment. Adding sites means increasing energy consumption.

With development of technologies, an internet of things has received wide attention in the field of wireless communications. 3GPP introduces related technologies for different types of internet of things terminals, such as machine type communication (Machine Type Communication, MTC), enhanced machine type communication (Enhanced Machine Type Communication, eMTC), narrowband internet of things (Narrowband Internet of Things, NB-IoT), and a reduced capability (Reduced Capability, RedCap) terminal. However, because most of current wireless devices are powered by batteries, maintenance costs are high, and some problems in some use cases urgently need to be resolved.

### SUMMARY

Embodiments of this application provide a communication method, a communication device, and a computer-readable storage medium. In this way, a terminal device completes, in a non-connected state, feedback of assistance information related to coverage of the terminal in each beam, so that the assistance information required by a network device is sent while reducing additional energy consumption of the terminal device as much as possible. After obtaining the coverage of the terminal in each beam, the network device properly disables or adjusts transmit power, to help reduce energy consumption.

According to a first aspect of this application, a communication method is provided. The method includes: A terminal device receives a trigger signal, where the trigger signal is used to trigger the terminal device to send assistance information to a network device; and sends the assistance information in response to receiving the trigger signal, where the assistance information indicates at least one beam in a plurality of beams of the network device, and the terminal device is in an idle state or an inactive state. In this manner, the terminal device can send, in the non-connected state, the assistance information required by the network device, thereby reducing energy consumption of the terminal device.

In some embodiments, the method may further include: receiving a response signal for the assistance information. Therefore, the terminal device can determine whether the assistance information is successfully received.

In some embodiments, the assistance information may be sent via at least one of the following: a radio resource control (Radio Resource Control, RRC) message; or a preamble sequence. Therefore, the assistance information may be sent to the network device in a plurality of manners.

In some embodiments, the assistance information may be sent via the RRC message, and the assistance information includes an index of the at least one beam. Therefore, a specific beam may be indicated to the network device.

In some embodiments, the assistance information may be sent via the RRC message, and the assistance information further includes at least one of the following: a cause value, indicating that a reason for sending the RRC message is that the trigger signal is received; or an identifier (Identity, ID) of the terminal device. Therefore, a plurality of types of information may be indicated to the network device.

In some embodiments, the response signal may be received via at least one of the following: an RRC reject message, where the RRC reject message includes a reject cause value, and the reject cause value indicates a response to the RRC message including the assistance information; an RRC release message, where the RRC release message includes a release cause value, and the release cause value indicates a response to the RRC message including the assistance information; or an RRC feedback message, where the RRC feedback message indicates a response to the RRC message including the assistance information. Therefore, the response signal may be received in a plurality of manners.

In some embodiments, the assistance information may be sent via a preamble sequence, and the preamble sequence corresponds to a beam in the at least one beam sent by the network device. Therefore, the network device may determine a target beam based on the preamble sequence.

In some embodiments, the response signal may be received via a random access response (Random Access Response, RAR) message, the RAR message includes a first field, and a first value of the first field indicates a response to the assistance information. Therefore, the terminal device may determine, based on the RAR message, that the assistance information has been successfully received.

In some embodiments, the trigger signal may be carried in a paging message, and the paging message includes a first trigger indication used to trigger the terminal device to send the assistance information. Therefore, the terminal device may send the assistance information based on the paging message.

In some embodiments, the trigger signal may be a low-power wake-up signal (Low-Power Wake-Up Signal, LP-WUS), and the trigger signal includes at least one of the following: a second trigger indication used to trigger the terminal device to send the assistance information; or a paging group indication. Therefore, the network device may send the trigger signal in a plurality of manners.

In some embodiments, the trigger signal may include the paging group indication, and the method further includes: receiving the paging message, where the paging message carries the first trigger indication used to trigger the terminal device to send the assistance information. Therefore, the terminal device may send the assistance information based on the paging message.

In some embodiments, the trigger signal may be received via at least one of the following: a paging message, including an indication used to trigger an ultra-low power consumption communication module to send the assistance information; an LP-WUS, where the LP-WUS is used to trigger an ultra-low power consumption communication module to send the assistance information; or first ultra-low power consumption signaling, where the first ultra-low power consumption signaling is used to trigger an ultra-low power consumption communication module to send the assistance information. Therefore, the terminal device may send the assistance information based on the ultra-low power consumption communication module.

In some embodiments, the method may further include: receiving resource configuration information used for the ultra-low power consumption communication module, where the resource configuration information includes at least one of the following corresponding to the plurality of beams: a time domain resource or a frequency domain resource. Therefore, the terminal device may send the assistance information by using the ultra-low power consumption communication module based on the resource configuration information.

In some embodiments, the resource configuration information may include the frequency domain resource corresponding to the at least one beam, and resources corresponding to different beams are multiplexed in a frequency division multiplexing manner. Therefore, the terminal device may send the assistance information by using the ultra-low power consumption communication module based on the frequency domain resource.

In some embodiments, sending the assistance information may include: selecting a target beam from the plurality of beams based on received signal strengths associated with the plurality of beams; determining, based on the resource configuration information, a resource corresponding to the target beam; and sending the assistance information on the resource. Therefore, the terminal device may send the assistance information by using the resource corresponding to the target beam.

In some embodiments, the assistance information may include the index of the at least one beam, and a received signal strength associated with the at least one beam is greater than or equal to a threshold; or the assistance information includes an index of one beam, and the one beam has a strongest received signal strength in the plurality of beams. Therefore, the target beam may be determined in different manners.

In some embodiments, when a value of the first trigger indication may indicate, when the value is set to a first value, that the assistance information is not to be sent, or indicate, when the value is set to a second value, that the assistance information is to be sent; or a value of the second trigger indication indicates, when the value is set to a first value, that the assistance information is not to be sent, or indicates, when the value is set to a second value, that the assistance information is to be sent. Therefore, the trigger signal may trigger sending of the assistance information or may not trigger sending of the assistance information.

According to a second aspect of this application, a communication method is provided. The method includes: sending a trigger signal, where the trigger signal is used to trigger a terminal device to send assistance information to a network device; and receiving the assistance information, where the assistance information indicates at least one beam in a plurality of beams of the network device, and the terminal device is in an idle state or an inactive state. In this manner, the network device can receive the assistance information, and obtain coverage of the terminal in each beam.

In some embodiments, the method may further include: performing, based on the assistance information, adjustment on one or more of the plurality of beams, where the adjustment includes at least one of the following: disabling the one or more beams; or adjusting transmit power of the one or more beams. Therefore, energy consumption of the network device can be reduced.

In some embodiments, the trigger signal may be sent via at least one of the following: a paging message; an LP-WUS; or first ultra-low power consumption signaling, where the first ultra-low power consumption signaling is used to trigger an ultra-low power consumption communication module to send the assistance information. In this way, the trigger signal may be sent in a plurality of manners.

In some embodiments, the method may further include: sending a response signal for the assistance information in response to the assistance information. In this way, the network device may indicate to the terminal device whether the assistance information is successfully received.

In some embodiments, the assistance information may be received via at least one of the following: an RRC message or a preamble sequence. Therefore, the network device may receive the assistance information in a plurality of manners.

In some embodiments, the assistance information may be received via the RRC message, and the assistance information includes an index of the at least one beam. Therefore, the network device may determine a target beam.

In some embodiments, the assistance information may be received via the RRC message, and the assistance information further includes at least one of the following: a cause value, indicating that a reason for sending the RRC message is that the trigger signal is received; or an identifier of the terminal device. Therefore, a plurality of types of information may be indicated to the network device.

In some embodiments, the response signal may be sent via at least one of the following: an RRC reject message, where the RRC reject message includes a reject cause value, and the reject cause value indicates a response to the RRC message including the assistance information; an RRC release message, where the RRC release message includes a release cause value, and the release cause value indicates a response to the RRC message including the assistance information; or an RRC feedback message, where the RRC feedback message indicates a response to the RRC message including the assistance information. Therefore, the response signal may be sent in a plurality of manners.

In some embodiments, the assistance information may be received via the preamble sequence, and the preamble sequence corresponds to a beam in the at least one beam sent by the network device. Therefore, the network device may determine a target beam based on the preamble sequence.

In some embodiments, the response signal may be sent via an RAR message, the RAR message includes a first field, and a first value of the first field indicates a response to the assistance information. Therefore, the terminal device may determine, based on the RAR message, that the assistance information has been successfully received.

In some embodiments, the trigger signal may be the LP-WUS, and the trigger signal includes at least one of the following: a second trigger indication used to trigger the terminal device to send the assistance information; or a paging group indication. Therefore, the network device may send the trigger signal in a plurality of manners.

In some embodiments, the trigger signal may include the paging group indication, and the method may further include: sending a paging message to a plurality of terminal devices including the terminal device, where the paging message carries a first trigger indication used to trigger the terminal device to send the assistance information. Therefore, the terminal device may send the assistance information based on the paging message.

In some embodiments, the trigger signal may be sent via the paging message, and the trigger signal includes at least one of the following: a first trigger indication used to trigger the terminal device to send the assistance information; or an indication used to trigger the ultra-low power consumption communication module of the terminal device to send the assistance information. Therefore, the network device may send the trigger signal in a plurality of manners.

In some embodiments, the method may further include: sending resource configuration information used for the ultra-low power consumption communication module, where the resource configuration information includes at least one of the following corresponding to the plurality of beams: a time domain resource or a frequency domain resource. Therefore, the terminal device may send the assistance information by using the ultra-low power consumption communication module based on the resource configuration information.

In some embodiments, the resource configuration information may include the frequency domain resource corresponding to the at least one beam, and resources corresponding to different beams are multiplexed in a frequency division multiplexing manner. Therefore, the terminal device may send the assistance information by using the resource corresponding to the target beam.

In some embodiments, when a value of the first trigger indication may indicate, when the value is set to a first value, that the assistance information is not to be sent, or indicate, when the value is set to a second value, that the assistance information is to be sent; or a value of the second trigger indication may indicate, when the value is set to a first value, that the assistance information is not to be sent, or indicate, when the value is set to a second value, that the assistance information is to be sent. Therefore, the trigger signal may trigger sending of the assistance information or may not trigger sending of the assistance information.

According to a third aspect of this application, a communication apparatus is provided. The communication apparatus includes a processor and a memory storing instructions. When the instructions are executed by the processor, the communication apparatus is enabled to perform any method according to any one of the first aspect to the fourth aspect and the implementations thereof.

According to a fourth aspect of this application, a communication apparatus is provided. The communication apparatus includes a component configured to receive a trigger signal, where the trigger signal is used to trigger a terminal device to send assistance information to a network device; and a component configured to send the assistance information in response to receiving the trigger signal, where the assistance information indicates at least one beam in a plurality of beams of the network device, and the terminal device is in an idle state or an inactive state.

According to a fifth aspect of this application, a communication apparatus is provided. The communication apparatus includes a component configured to send a trigger signal, where the trigger signal is used to trigger a terminal device to send assistance information to a network device; and a component configured to receive the assistance information, where the assistance information indicates at least one beam in a plurality of beams of the network device, and the terminal device is in an idle state or an inactive state.

According to a sixth aspect of this application, a chip is provided. The chip includes a processing circuit, configured to perform the method according to any one of the first aspect or the second aspect and the implementations of the first aspect or the second aspect.

According to a seventh aspect of this application, a computer program product is provided. The computer program product includes instructions, and when the instructions are executed by an electronic device, the electronic device is enabled to perform the method according to any one of the first aspect or the second aspect and the implementations of the first aspect or the second aspect.

According to an eighth aspect of this application, a computer-readable storage medium is provided. The computer-readable storage medium stores instructions, and when the instructions are executed by an electronic device, the electronic device is enabled to perform the method according to any one of the first aspect or the second aspect and the implementations of the first aspect or the second aspect.

It should be understood that the content described in the summary is not intended to limit key or important features of this application or limit the scope of this application. The following descriptions facilitate understanding of other features of this application.

### BRIEF DESCRIPTION OF DRAWINGS

The foregoing and other features, advantages, and aspects of embodiments of this application become clearer with reference to the accompanying drawings and the following detailed descriptions. In the accompanying drawings, same or similar reference numerals indicate same or similar elements.
FIG. 1A is a diagram of a communication system in which an embodiment of this application may be implemented;
FIG. 1B is a diagram of communication between a network and a terminal with different power consumption modules related to some embodiments of this application;
FIG. 1C is a diagram of a standalone (Standalone, SA) networking scenario in which an embodiment of this application may be implemented;
FIG. 1D is a diagram of a dual connectivity (Dual Connectivity, DC) scenario in which an embodiment of this application may be implemented;
FIG. 2 is a diagram of signaling exchange in a communication process according to some embodiments of this application;
FIG. 3 is a diagram of communication transmission resources of an ultra-low power consumption communication module according to an embodiment of this application;
FIG. 4 shows an example process of a communication process according to some embodiments of this application;
FIG. 5 is a diagram of resources associated with SSBs according to an embodiment of this application;
FIG. 6 is a schematic flowchart of a method implemented at a terminal device according to an embodiment of this application;
FIG. 7 is a schematic flowchart of a method implemented at a network device according to an embodiment of this application;
FIG. 8 is a simplified block diagram of an example device in a possible implementation according to an embodiment of this application; and
FIG. 9 is a simplified block diagram of an example device in a possible implementation according to an embodiment of this application.

Throughout all the accompanying drawings, same or similar reference numerals represent same or similar components.

### DESCRIPTION OF EMBODIMENTS

The following describes embodiments of this application in more detail with reference to the accompanying drawings. Although some embodiments of this application are shown in the accompanying drawings, it should be understood that this application may be implemented in various forms and should not be construed as being limited to embodiments described herein, and instead, these embodiments are provided for a more thorough and complete understanding of this application. It should be understood that, the accompanying drawings and embodiments of this application are merely used as examples, but are not used to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. The term "and/or" indicates at least one of two items associated with the term. For example, "A and/or B" indicates A, B, or A and B. Other explicit and implicit definitions may also be included below.

Embodiments of this application may be implemented according to any appropriate communication protocol, including but not limited to cellular communication protocols such as a 3rd generation (3rd Generation, 3G) communication protocol, a 4th generation (4G) communication protocol, a 5th generation (5G) communication protocol, and future communication protocols (for example, a 6th generation (6G) communication protocol), wireless local area network communication protocols such as the Institute of Electrical and Electronics Engineers (Institute of Electrical and Electronics Engineers, IEEE) 802.11, and/or any other protocols currently known or developed in future.

Technical solutions in embodiments of this application are applied to a communication system that complies with any appropriate communication protocol, for example, a general packet radio service (General Packet Radio Service, GPRS) system, a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access 2000, CDMA 2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation (5G) system (for example, a new radio (New Radio, NR) system), and a future communication system (for example, a 6th generation (6G) system).

For the purpose of description, the following describes embodiments of this application on the background of a 5G communication system in 3GPP. However, it should be understood that embodiments of this application are not limited to the communication system, but may be applied to any communication system having a similar problem, for example, a wireless local area network (Wireless Local Area Network, WLAN), a wired communication system, or another communication system developed in the future.

A term "terminal" or "terminal device" used in this application refers to any terminal device that can communicate with a network device or each other in a wired or wireless manner. The terminal device may sometimes be referred to as user equipment or UE. The terminal device may be any type of mobile terminal, fixed terminal, or portable terminal. The terminal device may be one of various wireless communication devices that have a wireless communication function. With emergence of an internet of things (Internet of Things, IOT) technology, more devices that previously have no communication function, for example without limitation to, a household appliance, a transportation tool, a tool device, a service device, and a service facility, start to obtain a wireless communication function by being configured with a wireless communication unit, so as to access a wireless communication network, and accept remote control. Such a device has the wireless communication function because the device is configured with the wireless communication unit, and is therefore classified as a wireless communication device. For example, the terminal device may include a mobile cellular phone, a cordless phone, a mobile terminal (Mobile Terminal, MT), a mobile station, a mobile device, a wireless terminal, a handheld device, a client, a subscription station, a portable subscription station, an internet node, a communicator, a desktop computer, a laptop computer, a notebook computer, a tablet computer, a personal communication system device, a personal navigation device, a personal digital assistant (Personal Digital Assistant, PDA), a wireless data card, a wireless modem (Modulator demodulator, Modem), a positioning device, a radio broadcast receiver, an e-book device, a game device, an IoT device, a vehicle-mounted device, a flight device, a virtual reality (Virtual Reality, VR) device, an augmented reality (Augmented Reality, AR) device, a wearable device (such as a smartwatch), a terminal device in a 5G network or any terminal device in an evolved public land mobile network (Public Land Mobile Network, PLMN), another device that can be used for communication, a terminal device applicable to a 6G network, or any combination thereof.

A term "network node" or "network device" used in this application is an entity or node that can be used to communicate with the terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a wireless access service for the terminal device. Specifically, each base station corresponds to a service coverage area, and a terminal device entering the area may communicate with the base station by using a radio signal, to receive the radio access service provided by the base station. The service coverage areas of base stations may overlap, and a terminal device in an overlapping area may receive radio signals from a plurality of base stations. Therefore, the plurality of base stations may simultaneously provide services for the terminal device. Based on a size of a provided service coverage area, the access network device may include a macro base station for providing a macro cell (Macro cell), a micro base station for providing a micro cell (Micro cell), a pico base station for providing a pico cell, and a femto base station for providing a femto cell (Femto cell). In addition, the access network device may further include various forms of relay stations, access points, remote radio units (Remote Radio Units, RRUs), radio heads (Radio Heads, RHs), remote radio heads (Remote Radio Heads, RRHs), and the like. In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network.

It should be understood that in the technical solutions provided in embodiments of this application, some repeated parts may not be described again in the following descriptions of specific embodiments, but it should be considered that these specific embodiments are mutually referenced and may be combined.

To satisfy the growing demand of people for traffic, wireless networks are being rapidly constructed. As a network scale increases, network energy consumption increases continuously, and costs of operators are significantly increased due to electricity fees. A main reason for the increase in energy consumption is that in 5G and 6G eras, AAUs are widely used, and a quantity of antennas on the base station side increases significantly. Compared with that in 3G and 4G eras, energy consumption of base stations increases exponentially. In addition, in the 5G and 6G eras, more transmission bandwidths are required due to a demand for higher data rates and heavier traffic. This increases energy consumption on the base station side accordingly. In addition, use of millimeter waves and terahertz leads to dense site deployment. Adding sites means increasing energy consumption.

Regardless of research in a current wireless communication system or research in a next-generation wireless communication system, optimization research is continuously needed for energy saving on a network side. An existing overall 5G energy saving technical system includes device-level, site-level, and network-level energy saving. For device-level energy saving, hardware energy saving is conducted mainly from a perspective of component and hardware designs. For site-level energy saving, software energy saving is conducted mainly from aspects of symbol power saving, channel shutdown, carrier shutdown, and deep dormancy. For network-level energy saving, intelligent energy saving is conducted by a terminal from a perspective of multi-network coordination.

In addition, energy consumption reduction on the network side is continuously researched during NR system evolution. For example, in 3GPP Rel-18, a corresponding study item (Study Item, SI) and a corresponding work item (Work Item, WI) for a network energy saving feature are separately initiated, to support flexible antenna unit shutdown and flexible transmit power adjustment that are on the network side, and discontinuous transmission on the base station side. Considering existing terminals on the live network, a mechanism for avoiding access of the existing terminals to cells that support the new energy saving feature is also studied.

With development of technologies, an internet of things has received wide attention in the field of wireless communications. 3GPP also introduces related technologies for different types of internet of things terminals in different releases, such as machine type communication (Machine Type Communication, MTC), enhanced machine type communication (Enhanced Machine Type Communication, eMTC), narrowband internet of things (Narrowband Internet of Things, NB-IoT), and a reduced capability (Reduced Capability, RedCap) terminal. Because most of current wireless devices are powered by batteries, maintenance costs are high, environmental problems are serious, and even security risks exist in some use cases. In addition, to further reduce a size, complexity, and power consumption of an internet of things device, the internet of things (Ambient IoT, AIoT), which is based on a device without a battery or with a limited energy storage capability, has become a recent research hotspot. For this type of terminal, energy is provided by collecting radio waves, light, motion, heat, or any other suitable power supply. The AIoT may also be referred to as a zero power consumption terminal, a near-zero power consumption terminal (zero power device), a passive IoT (passive IoT), ambient backscatter (Ambient Backscatter Communication, AmBC), passive reflection-based communication, or the like. Compared with low-power wide-area services (such as NB-IoT and eMTC), the AIoT has lower complexity and power consumption, enabling more application scenarios.

The AIoT is applicable to an ambient backscatter system. The ambient backscatter system generally includes three parts: an ambient radio frequency source, a backscatter device, and a reader/writer. In the ambient backscatter communication system, the backscatter device may obtain energy from the ambient radio frequency source, and use a radio signal broadcast by the ambient radio frequency source to communicate with each other. The zero power consumption device receives a carrier signal sent by the reader/writer, collects energy by using a radio frequency (Radio Frequency, RF) energy collection module, to supply the energy to a low power consumption processing module. After the energy is obtained, a backscatter tag drives a corresponding circuit to adjust an incoming signal and perform backscattering.

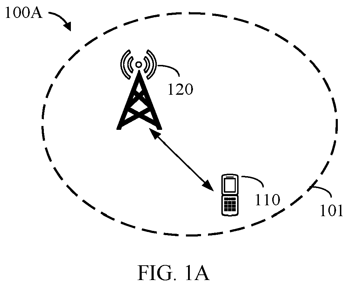

FIG. 1A is a diagram of a communication system 100A in which an embodiment of this application may be implemented. As shown in FIG. 1A, the system 100A may include a terminal device 110 and a network device 120. The terminal device 110 may have a wireless transceiver function, can communicate (for example, perform wireless communication) with one or more network devices in one or more communication systems, and receive a network service provided by the network device. The network device herein includes but is not limited to the network device shown in the figure. The network device 120 manages a cell 101. It should be understood that the cell herein includes but is not limited to the cell shown in the figure.

According to different energy consumption, communication modules on the terminal side may be classified into three types: a main radio module, a low power consumption communication module, and an ultra-low power consumption communication module. The low power consumption communication module corresponds to a low power consumption receiver module (Low-Power Wake-Up Receiver, LP-WUR), and the ultra-low power consumption communication module corresponds to a communication module based on ambient reflection, which is similar to the foregoing AIoT, the passive IoT, and the near-zero power consumption terminal. The terminal device 110 may be deployed with at least one of the main radio module, the low power consumption communication module, or the ultra-low power consumption communication module. In some embodiments, when the terminal device 110 is in an idle state or an inactive state or does not have a state change, the terminal device 110 communicates with the network device 120, and sends, to the network device 120, assistance information required by a network side, so that the network side obtains coverage of the terminal in each beam.

It should be understood that quantities of terminal devices and network devices shown in FIG. 1A are merely examples. There may be more or fewer terminal devices, network devices, and cells. This is not limited in this application.

In addition, it should be understood that the communication system 100A may be used in various scenarios. For example, an application scenario of the communication system 100A includes but is not limited to an existing communication system or a future evolved communication system like a 4th generation (4G) system, a 5th generation (5G) system, a new radio (new radio, NR) communication system, or a non-terrestrial network (Non-Terrestrial Network, NTN) system. In addition, it should also be understood that the foregoing communication may comply with any appropriate communication technology and a corresponding communication standard.

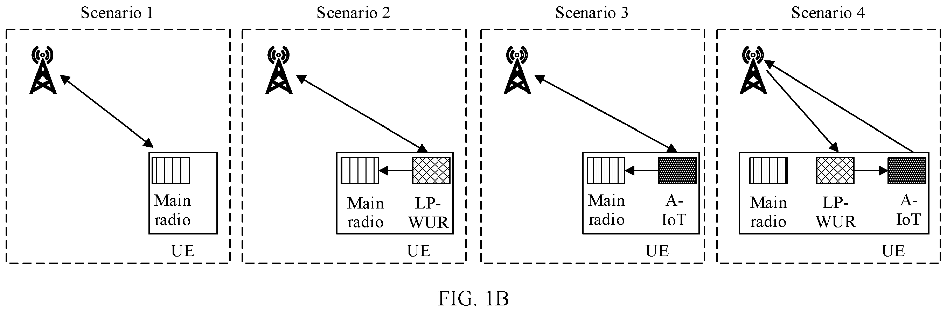

FIG. 1B is a diagram of communication between a network and a terminal with different power consumption modules related to some embodiments of this application. As shown in FIG. 1B, four scenarios may be classified based on deployment of different power consumption modules in the terminal. In a scenario 1, only a main radio module is deployed on the terminal side, the main radio module of the terminal is always enabled, and a network side always communicates with the main radio module of the terminal. In a scenario 2, a main radio module and an LP-WUR module are deployed on the terminal side. When there is no data transmission, the main radio module of the terminal is disabled, and the LP-WUR may receive a low-power wake-up signal (Low-Power Wake-Up Signal, LP-WUS) sent by a network side. In a scenario 3, a main radio module and an ultra-low power consumption communication module are deployed on the terminal side. When there is no data transmission, the main radio module of the terminal is disabled, and an A-IoT module receives and sends low power consumption signaling/data with a network side. In a scenario 4, a main radio module, an LP-WUR module, and an ultra-low power consumption communication module are deployed on the terminal side. When there is no data transmission, the main radio module of the terminal is disabled, the LP-WUR may receive a downlink signal sent by a network side, and an A-IoT module sends uplink signaling/data in a low power consumption manner.

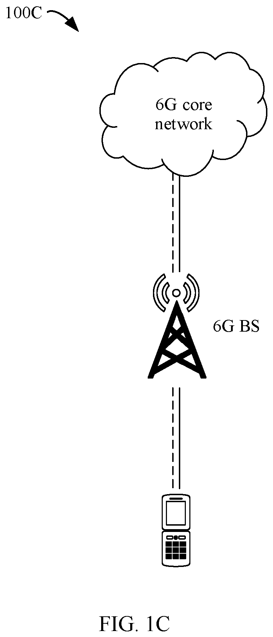

FIG. 1C is a diagram of an SA scenario 100C in which an embodiment of this application may be implemented. As shown in FIG. 1C, a terminal device is connected to a single base station, the base station connected to the terminal is of a same standard as a core network connected to the base station. For example, the core network is a 5G core network, the base station is correspondingly a 5G base station, and the 5G base station is directly connected to the 5G core network; or the core network is a 6G core network, the base station is a 6G base station, and the 6G base station is directly connected to the 6G core network.

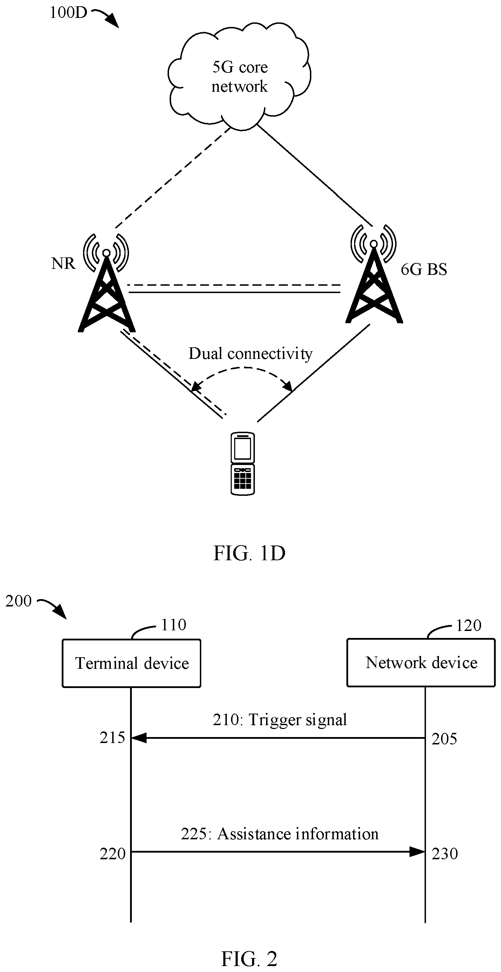

FIG. 1D is a diagram of an DC scenario 100D in which an embodiment of this application may be implemented. As shown in FIG. 1D, a terminal device may be connected to base stations of different standards or a same standard at the same time, and is applicable to UE in a connected state. In an example, a core network is a 5G core network, and the terminal device may be connected to both the 5G base station and a 6G base station, where the 5G base station serves as a master station, and the 6G base station serves as a secondary station. In another example, the core network is a 6G core network, and the terminal device may be connected to both the 6G base station and a 5G base station, where the 6G base station serves as a master station, and the 5G base station serves as a secondary station. In still another example, the core network is a 6G core network, and the terminal device may be connected to two 6G base stations, that is, both a master station and a secondary station are 6G base stations.

An NR supports high-frequency deployment and uses a plurality of antennas to enhance coverage. However, more antennas cause antenna radiation to be a very narrow beam. Considering that a single narrow beam cannot cover an entire cell, a concept of beam sweeping is introduced in the NR. That is, the base station can send a beam in a specific direction at a specific moment, and send different beams at a plurality of moments to cover directions required by the entire cell.

A primary synchronization signal (Primary Synchronization Signal, PSS), a secondary synchronization signal (Secondary Synchronization Signal, SSS), and a physical broadcast channel (Physical Broadcast Channel, PBCH) need to be configured in each beam, so that the terminal can complete downlink synchronization and obtain cell-related information (for example, a receiving configuration of a system information block, SIB 1). In the NR, the PSS, SSS, and PBCH are bundled and delivered together, and are collectively referred to as an SSB (SS PBCH Block). As described above, a network side covers the entire cell through beam sweeping. Therefore, N SSB beams are required, and these SSBs are also referred to as SSB bursts (SSB bursts) or an SSB burst set (SSB burst set). In a multi-beam scenario, the SIB 1 and a paging message are also sent in each beam.

Because there is a terminal in an idle state or an inactive state in a network, but the network side cannot learn of a specific beam in which the terminal is located, blind SSB beam adjustment may cause an increase in an access delay of the terminal in the idle state or even no coverage. Therefore, it is difficult to disable the SSB beams on the network side. As a result, the network side always sends the SSBs in an omnidirectional beam sweeping manner. However, when the network is idle, periodically sent SSBs and SIBs 1 are one of main factors of energy consumption of the network side. In this case, if the SSB and the SIB 1 are still sent for beams without terminals, a waste of resources and an increase in energy consumption are caused.

In view of the foregoing research and analysis, embodiments of this application provide a communication method, a communication device, a computer-readable storage medium, and a computer program product. In the method, a terminal device receives a trigger signal, where the trigger signal is used to trigger the terminal device to send assistance information to a network device. The terminal device sends the assistance information in response to receiving the trigger signal, where the assistance information indicates at least one beam in a plurality of beams of the network device, and the terminal device is in an idle state or an inactive state. In this manner, the terminal device completes feedback in a non-connected state, so that the assistance information required by a network side is sent while reducing additional energy consumption of the terminal device as much as possible. This helps reduce energy consumption after the network obtains coverage of the terminal in each beam.

FIG. 2 is a diagram of signaling exchange in a communication process according to some embodiments of this application. For clarity of discussion without any limitation, the process 200 is discussed with reference to FIG. 1A.

In the process 200, a network device 120 sends a trigger signal 210 to a terminal device 110 at 205, where the trigger signal 210 is used to trigger the terminal device 110 to send assistance information to the network device 120. The assistance information may indicate at least one beam in a plurality of beams of the network device 120, and the terminal device 110 is in an idle state or an inactive state. For example, the plurality of beams of the network device may cover one or more terminal devices, and the assistance information sent by the terminal device 110 may indicate a beam with best received signal quality, so that the network device determines whether there is a terminal to be accessed under coverage of each beam. The terminal device 110 may be in a non-connected state, and may also not have a state change. The non-connected state may include the idle state or the inactive state.

In some embodiments, the trigger signal may be sent via a paging message, and the trigger signal includes: a first trigger indication used to trigger the terminal device 110 to send the assistance information, an indication used to trigger an ultra-low power consumption communication module of the terminal device 110 to send the assistance information, or one or both of the foregoing. In an example, the indication information in the paging message sent by the network device 120 may be indicated by using a short message (Short Message), and the first trigger indication may be location-UL-Feedback. In another example, the terminal device 110 is deployed with the ultra-low power consumption communication module, and the indication information in the paging message sent by the network device 120 may also be indicated by using a short message, but carried information is different. A purpose of the paging information is to trigger the terminal device 110 to feed back an uplink signal based on the ultra-low power consumption communication module. The indication may be aIoT-UL-Feedback. When the aIoT-UL-Feedback indication in the short message received by the terminal device 110 is set to 1, an A-IoT module of the terminal device 110 sends the assistance information. It should be understood that communication between the network device and the A-IoT module is bidirectional, that is, the network device and the A-IoT module may send data or signaling to each other.

In some embodiments, the trigger signal may be an LP-WUS, and the trigger signal may include a second trigger indication used to trigger the assistance information of the terminal device, a paging group indication, or one or both of the foregoing. For example, a main radio module of the terminal device 110 is disabled, and the terminal device 110 receives the LP-WUS by using an LP-WUR. In an example, the LP-WUS carries the second trigger indication, to indicate the LP-WUR to wake up the main radio module after receiving the LP-WUS and the main radio module to perform feedback.

In addition or alternatively, when the trigger signal includes the paging group indication, the network device 120 may further send a paging message to a plurality of terminal devices including the terminal device 110, where the paging message carries a first trigger indication used to trigger the terminal device 110 to send the assistance information. Correspondingly, when the trigger signal includes the paging group indication, the terminal device 110 may receive the paging message from the network device 120. For example, the terminal device 110 further receives the paging message on the main radio module. In this scenario, for sending of the paging message, refer to the foregoing related content.

In some embodiments, a value of the first trigger indication indicates, when the value is set to a first value, that the assistance information is not to be sent, or indicates, when the value is set to a second value, that the assistance information is to be sent. For example, when a location-UL-Feedback indication in a short message received by the terminal device 110 is set to 1, the terminal device 110 sends the assistance information, or when the location-UL-Feedback indication is set to 0, it indicates that the terminal device 110 is not triggered to send the assistance information. In some embodiments, a value of the second trigger indication indicates, when the value is set to a first value, that the assistance information is not to be sent, or indicates, when the value is set to a second value, that the assistance information is to be sent. For example, the second trigger indication carried in the LP-WUS may be indicated by using one bit. If the bit is set to 0, it indicates that uplink feedback in the non-connected state is not triggered. If the bit is set to 1, it indicates that feedback in the non-connected state is triggered.

In addition, the trigger signal may be sent via the paging message, first ultra-low power consumption signaling, or one or both of the foregoing. The paging message includes an indication used to trigger the ultra-low power consumption communication module to send the assistance information. The first ultra-low power consumption signaling is used to trigger the ultra-low power consumption communication module to send the assistance information. Optionally, the trigger signal may alternatively be an LP-WUS, and the LP-WUS is used to trigger the ultra-low power consumption communication module to send the assistance information.

In some embodiments, the network device 120 may further send resource configuration information used for the ultra-low power consumption communication module, where the resource configuration information includes a time domain resource, a frequency domain resource, or one or two of the foregoing corresponding to the plurality of beams. Correspondingly, the terminal device 110 may further receive the resource configuration information used for the ultra-low power consumption communication module, where the resource configuration information includes the time domain resource, the frequency domain resource, or one or two of the foregoing corresponding to the plurality of beams. In some embodiments, the resource configuration information includes the frequency domain resource corresponding to the at least one beam, and resources corresponding to different beams are multiplexed in a frequency division multiplexing manner.

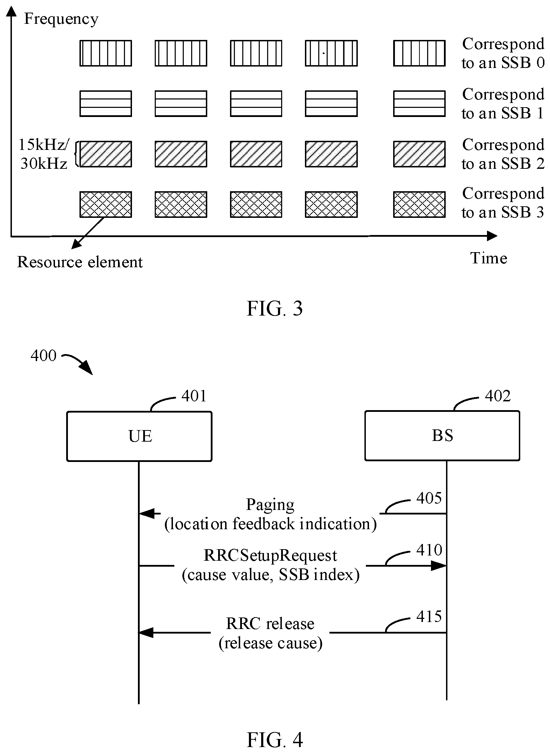

For example, the network device broadcasts a transmission resource based on the ultra-low power consumption communication module. In an example, a system message broadcasts a time-frequency resource used for A-IoT communication. For different SSB beams, different resources may be configured in a time division or frequency division manner. Frequency division is used as an example. Different frequency domain communication resources are configured for different SSB beams. As shown in FIG. 3, each resource element corresponds to a segment of transmission resources in time domain and frequency domain. For different SSB beams, resource elements that are staggered in frequency domain may be configured or associated. In another example, a system message broadcasts a frequency domain resource, and a time domain start location of the resource may be related to paging, for example, starts from N slots after a paging slot (Paging Slot).

It should be understood that, as described above, the A-IoT module performs energy supply by receiving a signal sent by the network device, and performs data transmission in a reflection manner. For ultra-low power consumption communication in this embodiment of this application, a frequency resource used for the communication and a signal that is sent by the network device and that is used for energy supply or a signal that is sent by the network device to the A-IoT module, may be on a same frequency or on different frequencies. That is, the terminal performs frequency conversion and then performs reflection. Whether to perform frequency conversion may be predefined in a protocol, or may be configured by using signaling. For example, the network device configures a reflection frequency conversion indication. If the indication is configured to be 0, it indicates that frequency conversion is not performed. If the indication is not configured to be 0, it indicates that frequency conversion is performed based on a configured value.

Still refer to FIG. 2. The terminal device 110 receives the trigger signal 210 from the network device 120 at 215. In response to receiving the trigger signal, the terminal device 110 sends the assistance information 225 to the network device 120 at 220. In some embodiments, the assistance information may be sent via a radio resource control (RRC) message, a preamble sequence, or one or both of the foregoing. Optionally, the assistance information may be sent by using a media access control control element (Media Access Control Control Element, MAC CE).

Additionally or alternatively, the assistance information may be sent via the RRC message, and the assistance information may include an index of the at least one beam. For example, the index of the at least one beam may indicate a beam with best received signal quality. In some embodiments, the assistance information may be sent via the RRC message, and the assistance information may further include a cause value or an identifier ID of the terminal device, or one or both of the foregoing. The cause value may indicate that a reason for sending the RRC message is that the trigger signal is received. For example, after receiving the paging message, the terminal device 110 initiates a random access procedure, and carries the cause value in an RRC message corresponding to Msg3. In an example, the RRC message is RRCSetupRequest, and a new cause value, for example, UL feedback, is defined in EstablishmentCause in RRCSetupRequest, to indicate that the message is mainly used to respond to the foregoing paging message, and is not used to establish an RRC connection. Certainly, the RRC message and the setting of the cause value are merely examples, and the RRC message may alternatively be another RRC message, for example, an RRC resume message. In another example, in addition to the cause value, the RRC message may further carry at least one of an index of a strongest SSB and a UE ID.

Additionally or alternatively, the assistance information may be sent via a preamble sequence, and the preamble sequence may correspond to a beam in the at least one beam sent by the network device. For example, a dedicated preamble resource is broadcast in the system message, for example, includes one or more preamble sequences. These preamble sequences are used to trigger the terminal device to feed back the assistance information to the network. Different preamble sequences may be used for different SSB beams, so that the network device can determine, based on the detected preamble sequence, whether there is a terminal in each SSB beam. For a plurality of terminals in the SSB beams, a same preamble sequence and a same transmission resource may be reused.

In some embodiments, the terminal device is configured with an ultra-low power consumption communication module. To send the assistance information, the terminal device 110 may select a target beam from a plurality of beams based on received signal strengths associated with the plurality of beams. Based on the resource configuration information, the terminal device 110 may determine a resource corresponding to the target beam, and then the terminal device 110 sends the assistance information on the resource.

Optionally, the assistance information includes the index of the at least one beam, and a received signal strength associated with the at least one beam is greater than or equal to a threshold. For example, when there are a plurality of SSB beams, the network device may further set a signal quality threshold for triggering sending of the assistance information. That is, the terminal triggers sending of the assistance information only when the terminal detects that signal quality of a signal that is sent by the network device and that is associated with this SSB is greater than the configured threshold. Otherwise, even if the trigger signal is detected, the terminal does not trigger sending of the assistance information because the energy of the trigger signal is lower than the threshold. Optionally, the assistance information includes an index of one beam, and the one beam has a strongest received signal strength in the plurality of beams.

Still refer to FIG. 2. The network device 120 receives the assistance information 225 from the terminal device 110 at 230. In some embodiments, based on the assistance information, the network device 120 may perform adjustment on one or more of the plurality of beams. The adjustment may include: disabling the one or more beams, adjusting transmit power of the one or more beams, or one or both of the foregoing. For example, the one or more beams are disabled, so that repeated sending of the SSB, the SIB 1, or the paging message can be reduced, thereby reducing time for sending a signal by the network device 120, and enabling the network device 120 to have more sleep time.

Additionally or alternatively, the network device 120 sends a response signal for the assistance information in response to the assistance information. Correspondingly, the terminal device 110 may receive the response signal for the assistance information from the network device 120.

In some embodiments, when the assistance information is sent via an RRC message, the response signal may be received via an RRC reject message, an RRC release message, an RRC feedback message, or one or more of the foregoing. The RRC reject message may include a reject cause value, and the reject cause value indicates a response to the RRC message including the assistance information. The RRC release message may include a release cause value, and the release cause value indicates a response to the RRC message including the assistance information. The RRC feedback message indicates a response to the RRC message including the assistance information. For example, the response signal may reuse the RRC reject/RRC release message, but a reject value indication is added to the RRC message, for example, a reject cause value or a release cause value is added. Alternatively, a new RRC message, for example, RRC feedback, may be defined as a response to the RRC message sent by the terminal.

In some embodiments, when the assistance information is sent via the preamble sequence, the response signal may be received via a random access response (RAR) message, the RAR message includes a first field, and a first value of the first field indicates a response to the assistance information. For example, some fields in the RAR message may be set to specific values, to indicate that the preamble sequence has been successfully received and retransmission is not required. UL Grant (UL Grant) in the RAR may be set to all 0s, and/or a TA command (TA command) field may be set to 0, or another possible implementation may be used.

In general, the network device 120 may trigger, based on the trigger signal, the low power consumption module to feed back the uplink signal. On one hand, a sending trigger condition of the uplink signal is defined. On the other hand, the uplink signal may be sent by using the low power consumption module, and energy consumption caused to the terminal device 110 is low. After obtaining the coverage of the terminal in each beam, the network device 120 properly disables or adjusts the transmit power, to help reduce energy consumption of the network device. The terminal device 110 completes feedback of uplink assistance information in the non-connected state, so that the assistance information required by the network device is obtained while reducing additional energy consumption of the terminal device as much as possible, thereby helping reduce end-to-end (End to End, E2E) energy consumption.

FIG. 4 illustrates an example process of a communication process according to some embodiments of this application, where the communication process may be considered as a specific implementation of the communication process 200 in FIG. 2. The example process 400 involves UE 401 and a BS 402, where the UE 401 may be an example of the terminal device 110, and the BS 402 may be an example of the network device 120.

At 405, the BS 402 sends a paging message to the UE 401, where the paging message includes a location feedback indication. Correspondingly, the UE 401 receives the paging message from the BS 402.

At 410, the UE 401 sends an RRCSetupRequest message to the BS 402, where the RRCSetupRequest message may include an SSB beam index value, and may further include a cause value. Correspondingly, the BS 402 receives the RRCSetupRequest message from the UE 401.

At 415, the BS 402 sends an RRC release message to the UE 401, where the RRC release message may carry a release cause. Correspondingly, the UE 401 receives the RRC release message from the BS 402.

To understand this application more thoroughly and completely, the following describes Embodiment 1 with reference to FIG. 2. It should be noted that each part of content in Embodiment 1 may be used independently or randomly combined with content in another embodiment, and is merely used as an example but not intended to limit the protection scope of this application.

### Embodiment 1

Embodiment 1 mainly relates to the scenario 1 in FIG. 1B, that is, the network device 120 always communicates with the main radio module of the terminal device 110. The network device 120 sends a paging message to trigger the terminal device 110 to feed back a first uplink signal (namely, the assistance information in FIG. 2). It should be noted that, when sending the first uplink signal, the terminal device 110 does not need to establish an RRC connection to the network side, and the network side adjusts some SSB beams based on the received uplink signal. The adjustment herein includes: disabling an SSB beam, adjusting transmit power of a signal in this SSB beam, or stopping sending of a SIB 1 signal in this beam.

Specifically, the paging message sent by the network device 120 supports triggering the terminal device 110 to send the first uplink signal. The indication information is indicated by using a short message. An example of the indication is shown in Table 1.

**Table 1 Short message (Short Message) used to trigger the terminal device to send the first uplink signal**

| **Bit** | **Short Message** |
|---|---|
| 1 | **systemInfoModification** |
| | If set to 1: indication of a BCCH modification other than SIB6, SIB7 and SIB8. |
| 2 | **etwsAndCmasIndication** |
| | If set to 1: indication of an ETWS primary notification and/or an ETWS secondary notification and/or a CMAS notification. |
| 3 | **stopPagingMonitoring** |
| | This bit can be used for only operation with shared spectrum channel access and if nrofPDCCH-MonitoringOccasionPerSSB-InPO is present. |
| | If set to 1: indication that the UE may stop monitoring PDCCH occasion(s) for paging in this Paging Occasion as specified in TS 38.304 [20], clause 7.1. |
| 4 | **systemInfoModification-eDRX** |
| | If set to 1: indication of a BCCH modification other than SIB6, SIB7 and SIB8. This indication applies only to UEs using IDLE eDRX cycle longer than the BCCH modification period. |
| 5 | **location-UL-Feedback** |
| | If set to 1: used to trigger UL feedback without entering RRC connected mode |
| 6 - 8 | Not used in this release of the specification, and shall be ignored by UE if received. |

| | |
|---|---|
| location-UL-Feedback is an indication used to trigger the terminal device 110 to send the first uplink signal. When location-UL-Feedback indication in the short message received by the terminal device 110 is set to 1, the terminal device 110 sends the first uplink signal. The first uplink signal may have different forms. | |

In an example, the first uplink signal may be a layer 1-based uplink signal, for example, a preamble sequence. In another example, the first uplink signal may be a layer 3-based uplink signal, namely, an RRC message.

For the different first uplink signals, when the network device 120 receives the first uplink signal, the response signal sent by the network device 120 to the terminal device 110 is also different. In an example, the network device 120 receives the L1-based first uplink signal, and sets some fields in an RAR message to specific values, to indicate that the preamble sequence has been successfully received and retransmission is not required. For example, UL Grant in the RAR may be set to all 0s, and/or a TA command field may be set to 0, or another possible implementation may be used.

In another example, when the network device receives the L3-based first uplink signal, the RRC reject/RRC release message may be reused, but a reject value indication is added, for example, a reject cause value or a release cause value is added; or a new RRC message, for example, RRC feedback, is defined as a response to the RRC message sent by the terminal.

In addition, a new RRC procedure needs to be defined in a corresponding protocol. For example, after the terminal device 110 sends RRCSetupRequest, the network device 120 replies with an RRC release message, or another RRC message combination mentioned above, for example, a possible combination of a plurality of types of RRC messages sent by the terminal and a plurality of types of RRC messages replied by the network side.

To understand this application more thoroughly and completely, the following describes Embodiment 2 with reference to FIG. 2. It should be noted that each part of content in Embodiment 2 may be used independently or randomly combined with content in another embodiment, and is merely used as an example but not intended to limit the protection scope of this application.

### Embodiment 2

Embodiment 2 mainly relates to the scenario 2 in FIG. 1B. A main radio module of the terminal device 110 in the idle state is disabled, and the terminal device 110 receives an LP-WUS by using an LP-WUR. The network device 120 sends a downlink signal (namely, the trigger signal in FIG. 2) by using the LP-WUS, to trigger the terminal device 110 to send a first uplink signal. In addition, the terminal device 110 also feeds back the first uplink signal in a non-connected state. The network device 120 adjusts some SSBs based on the received first uplink signal. The network device 120 sends the LP-WUS signal, to trigger the terminal device 110 to send an auxiliary uplink signal. There may be the following different implementations.

In an example, the LP-WUS carries first uplink signal triggering indication information, for example, indicated by using one bit. If the bit is set to 0, it indicates that uplink feedback in the non-connected state is not triggered. If the bit is set to 1, it indicates that feedback in the non-connected state is triggered. In another example, the LP-WUS carries a plurality of paging group indications.

Correspondingly, when the LP-WUS signal carries the first uplink signal triggering indication information, and the indication is the feedback in the non-connected state, the main radio module of the terminal device 110 is woken up, and the main radio module performs feedback. The main radio module may perform feedback based on the L1-based uplink signal or the L3-based uplink signal.

When the LP-WUS signal carries the paging group indication, the main radio module further receives the paging message. In this scenario, for sending of the paging message, refer to the solution in Embodiment 1. To be specific, the trigger indication of the first uplink signal is carried in the short message in paging.

After receiving the first uplink signal, the network device 120 may reply via an RAR message or an RRC message, as a response to the first uplink signal. In addition, activation signaling for the LP WUR may be sent in a group manner, to trigger UE under coverage to reactivate the low power consumption module and enter an LP-WUS-based listening mode. The low power consumption communication module may not need to be reactivated. For example, the low power consumption communication module is always in communication. In this case, the activation signaling indicates the terminal device to enter the LP-WUS-based listening mode. Considering that a plurality of terminal devices may be simultaneously woken up when the first uplink signal is sent, the plurality of terminal devices are simultaneously enabled to enter a low power consumption module-based listening mode in a group activation manner.

To understand this application more thoroughly and completely, the following describes Embodiment 3 with reference to FIG. 2. It should be noted that each part of content in Embodiment 3 may be used independently or randomly combined with content in another embodiment, and is merely used as an example but not intended to limit the protection scope of this application.

### Embodiment 3

Embodiment 3 mainly relates to the scenario 3 and the scenario 4 in FIG. 1B. An A-IoT module is deployed on the terminal device 110. The terminal device 110 feeds back a first uplink signal by using the A-IoT module, and the network device 120 adjusts some beams based on the received first uplink signal.

In the scenario 3 and the scenario 4, the network device broadcasts a transmission resource based on an ultra-low power consumption communication module. In an example, a system message broadcasts a time-frequency resource used for A-IoT communication. In another example, the system message broadcasts a frequency domain resource, and a time domain start location of the resource may be related to paging, for example, starts from N slots after a paging slot.

When a specific condition is met, the network device sends a trigger signal, to trigger the terminal to send uplink feedback, that is, the first uplink signal, on a corresponding resource by using the A-IoT module. The trigger signal may be signaling, an LP-WUS signal, or a paging message that is applicable to A-IoT communication.

The paging message is used as an example. Indication information is carried in a short message, but carried information is different. As shown in Table 2, a purpose of the paging message is to trigger the terminal to feed back an uplink signal based on the A-IoT module.

**Table 2 Short message (Short Message) used to trigger sending of the first uplink signal based on the A-IoT module**

| **Bit** | **Short Message** |
|---|---|
| 1 | **systemInfoModification** |
| | If set to 1: indication of a BCCH modification other than SIB6, SIB7 and SIB8. |
| 2 | **etwsAndCmasIndication** |
| | If set to 1: indication of an ETWS primary notification and/or an ETWS secondary notification and/or a CMAS notification. |
| 3 | **stopPagingMonitoring** |
| | This bit can be used for only operation with shared spectrum channel access and if nrofPDCCH-MonitoringOccasionPerSSB-InPO is present. |
| | If set to 1: indication that the UE may stop monitoring PDCCH occasion(s) for paging in this Paging Occasion as specified in TS 38.304 [20], clause 7.1. |
| 4 | **systemInfoModification-eDRX** |
| | If set to 1: indication of a BCCH modification other than SIB6, SIB7 and SIB8. This indication applies only to UEs using IDLE eDRX cycle longer than the BCCH modification period. |
| 5 | **aIoT-UL-Feedback** |
| | If set to 1: indication of the transmission resource for A-IoT based UL feedback enabled |
| 6 - 8 | Not used in this release of the specification, and shall be ignored by UE if received. |

After detecting the trigger signal, the terminal device 110 feeds back the first uplink signal on the resource by using the A-IoT module. The first uplink signal may carry a terminal identifier. For example, when the signal is sent, the terminal identifier is carried through whether the signal is transmitted in time domain in an ON/OFF (on/off) manner.

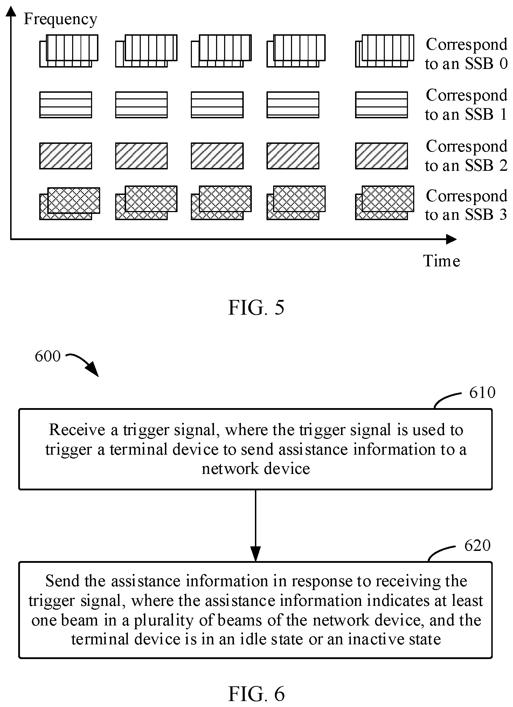

FIG. 5 is a diagram of resources associated with SSBs according to an embodiment of this application. FIG. 5 shows a downlink signal (that is, the trigger signal in FIG. 2) sent by the network device 120 when the network device 120 communicates with the A-IoT module. In addition, the network device configures the A-IoT module as co-frequency reflection. Resources associated with different SSBs are multiplexed in a frequency division manner. The terminal device 110 determines a feedback resource based on a strongest SSB signal detected by the terminal device 110, and correspondingly feeds back an uplink signal by using the A-IoT module. As shown in FIG. 5, there are terminals under an SSB 0 and an SSB 3, and signal feedback is performed by using the A-IoT module, so that the network device 120 learns that there is no user under an SSB 1 and an SSB 2, and correspondingly performs beam adjustment on the SSB 1 and the SSB 2.

Optionally, if the terminal device 110 supports energy storage, the terminal device 110 may further directly transmit data on the foregoing resource. In other words, the network device 120 configures an A-IoT transmission resource, and after receiving the trigger signal from the network device 120, the terminal device 110 correspondingly feeds back the first uplink signal on the A-IoT transmission resource configured by the network device 120.

Additionally, when there are a plurality of SSB beams, the network device 120 may further set a signal quality threshold for triggering sending of the first uplink signal. In other words, the terminal device 110 triggers sending of the first uplink signal only when the terminal device 110 detects that signal quality of the signal that is sent by the network device 120 and that is associated with the SSB is greater than the configured threshold. Otherwise, even if the downlink signal is detected, the terminal device 110 does not trigger sending of the first uplink signal because energy of the downlink signal is lower than the threshold.

It should be understood that, considering that there are terminals with various capabilities in the network, one or more of the solutions in Embodiment 1, Embodiment 2, and Embodiment 3 may exist at the same time. In the foregoing embodiment, the network side sends the trigger signal, used by the terminal to feed back the first uplink signal, and the terminal is always in the non-connected state. The trigger signal is carried by using a short message in a paging message, an LP-WUS, or low power consumption signaling. The first uplink signal is carried by using an RRC message, and the RRC message carries a dedicated cause value, to indicate that the RRC message is not used for connection establishment. In addition, the RRC message may be an RRC request or a response message that is not used for connection establishment. The first uplink signal may be implicitly carried by using a dedicated preamble. Based on the trigger signal, the terminal may be triggered to perform uplink transmission on the ultra-low power consumption transmission resource. Ultra-low power consumption transmission resources associated with different SSB beams are multiplexed in a frequency division multiplexing manner. Optionally, LP WUS activation signaling is further sent in a group manner.

FIG. 6 is a schematic flowchart of a method 600 implemented at a terminal device according to an embodiment of this application. For clarity of discussion without any limitation, the process 600 is discussed with reference to FIG. 1A. In a possible implementation, the method 600 may be implemented by the terminal device 110 in the communication system 100A. In another possible implementation, the method 600 may alternatively be implemented by another communication device independent of the communication system 100A. For example, the following describes the method 600 by using an example in which the method 600 is implemented by the terminal device 110 in the communication system 100A.

In a block 610, the terminal device 110 receives a trigger signal, where the trigger signal is used to trigger the terminal device to send assistance information to the network device. In a block 620, the first network device 110 sends the assistance information in response to receiving the trigger signal, where the assistance information indicates at least one beam in a plurality of beams of the network device, and the terminal device is in an idle state or an inactive state.

In some embodiments, the terminal device 110 may receive a response signal for the assistance information. In some embodiments, the assistance information may be sent via at least one of the following: an RRC message or a preamble sequence. In some embodiments, the assistance information may be sent via the RRC message, and the assistance information may include an index of the at least one beam. In some embodiments, the assistance information may be sent via the RRC message, and the assistance information may further include at least one of the following: a cause value, indicating that a reason for sending the RRC message is that the trigger signal is received; or an identifier ID of the terminal device.

In some embodiments, the response signal may be received via at least one of the following: an RRC reject message, where the RRC reject message includes a reject cause value, and the reject cause value indicates a response to the RRC message including the assistance information; an RRC release message, where the RRC release message includes a release cause value, and the release cause value indicates a response to the RRC message including the assistance information; or an RRC feedback message, where the RRC feedback message indicates a response to the RRC message including the assistance information.

In some embodiments, the assistance information may be sent via a preamble sequence, and the preamble sequence corresponds to a beam in the at least one beam sent by the network device. In some embodiments, the response signal may be received via an RAR message, the RAR message includes a first field, and a first value of the first field may indicate a response to the assistance information.

In some embodiments, the trigger signal may be carried in a paging message, and the paging message includes a first trigger indication used to trigger the terminal device to send the assistance information. In some embodiments, the trigger signal may be the LP-WUS, and the trigger signal may include at least one of the following: a second trigger indication used to trigger the terminal device to send the assistance information; or a paging group indication.

In some embodiments, the trigger signal may include the paging group indication, and the method may further include: receiving the paging message, where the paging message carries the first trigger indication used to trigger the terminal device to send the assistance information.

In some embodiments, the trigger signal may be received via at least one of the following: a paging message, including an indication used to trigger the ultra-low power consumption communication module to send the assistance information; an LP-WUS, where the LP-WUS is used to trigger the ultra-low power consumption communication module to send the assistance information; or first ultra-low power consumption signaling, where the first ultra-low power consumption signaling is used to trigger the ultra-low power consumption communication module to send the assistance information.

In some embodiments, the method may further include: receiving resource configuration information used for the ultra-low power consumption communication module, where the resource configuration information includes at least one of the following corresponding to the plurality of beams: a time domain resource or a frequency domain resource.

In some embodiments, the resource configuration information may include the frequency domain resource corresponding to the at least one beam, and resources corresponding to different beams are multiplexed in a frequency division multiplexing manner.

In some embodiments, sending the assistance information may include: selecting a target beam from the plurality of beams based on received signal strengths associated with the plurality of beams; determining, based on the resource configuration information, a resource corresponding to the target beam; and sending the assistance information on the resource.

In some embodiments, the assistance information may include the index of the at least one beam, and a received signal strength associated with the at least one beam is greater than or equal to a threshold; or the assistance information includes an index of one beam, and the one beam has a strongest received signal strength in the plurality of beams.

In some embodiments, when a value of the first trigger indication may indicate, when the value is set to a first value, that the assistance information is not to be sent, or indicate, when the value is set to a second value, that the assistance information is to be sent; or a value of the second trigger indication may indicate, when the value is set to a first value, that the assistance information is not to be sent, or indicate, when the value is set to a second value, that the assistance information is to be sent.

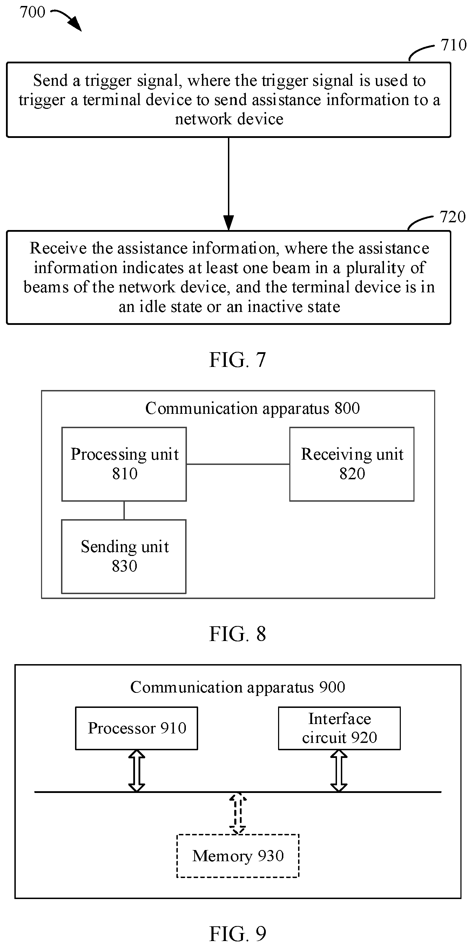

FIG. 7 is a schematic flowchart of a method 700 implemented at a network device according to an embodiment of this application. For clarity of discussion without any limitation, a process 700 is discussed with reference to FIG. 1A. In a possible implementation, the method 700 may be implemented by the network device 120 in the communication system 100A. In another possible implementation, the method 700 may alternatively be implemented by another communication device independent of the communication system 100A. For example, the following describes the method 700 by using an example in which the method 700 is implemented by the network device 120 in the communication system 100A.

In a block 710, the network device 120 sends a trigger signal, where the trigger signal is used to trigger the terminal device to send assistance information to the network device. In a block 720, the network device 120 receives the assistance information, where the assistance information indicates at least one beam in a plurality of beams of the network device, and the terminal device is in an idle state or an inactive state.

In some embodiments, the method may further include: performing, based on the assistance information, adjustment on one or more of the plurality of beams, where the adjustment includes at least one of the following: disabling the one or more beams; or adjusting transmit power of the one or more beams.

In some embodiments, the trigger signal may be sent via at least one of the following: a paging message; a low-power wake-up signal LP-WUS; or first ultra-low power consumption signaling, where the first ultra-low power consumption signaling is used to trigger an ultra-low power consumption communication module to send the assistance information.

In some embodiments, the method may further include: sending a response signal for the assistance information in response to the assistance information.

In some embodiments, the assistance information may be received via at least one of the following: a radio resource control RRC message or a preamble sequence. In some embodiments, the assistance information is received via the RRC message, and the assistance information includes an index of the at least one beam.

In some embodiments, the assistance information may be sent via the RRC message, and the assistance information further includes at least one of the following: a cause value, indicating that a reason for sending the RRC message is that the trigger signal is received; or an identifier ID of the terminal device.

In some embodiments, the response signal may be sent via at least one of the following: an RRC reject message, where the RRC reject message includes a reject cause value, and the reject cause value indicates a response to the RRC message including the assistance information; an RRC release message, where the RRC release message includes a release cause value, and the release cause value indicates a response to the RRC message including the assistance information; or an RRC feedback message, where the RRC feedback message indicates a response to the RRC message including the assistance information.

In some embodiments, the assistance information may be received via the preamble sequence, and the preamble sequence corresponds to a beam in the at least one beam sent by the network device. In some embodiments, the response signal is sent via a random access response RAR message, the RAR message includes a first field, and a first value of the first field may indicate a response to the assistance information.

In some embodiments, the trigger signal may be the LP-WUS, and the trigger signal may include at least one of the following: a second trigger indication used to trigger the terminal device to send the assistance information; or a paging group indication.

In some embodiments, the trigger signal may include the paging group indication, and the method may further include: sending a paging message to a plurality of terminal devices including the terminal device, where the paging message carries a first trigger indication used to trigger the terminal device to send the assistance information.

In some embodiments, the trigger signal may be sent via the paging message, and the trigger signal may include at least one of the following: a first trigger indication used to trigger the terminal device to send the assistance information; or an indication used to trigger the ultra-low power consumption communication module of the terminal device to send the assistance information.

In some embodiments, the method may further include: sending resource configuration information used for the ultra-low power consumption communication module, where the resource configuration information includes at least one of the following corresponding to the plurality of beams: a time domain resource or a frequency domain resource.

In some embodiments, the resource configuration information may include the frequency domain resource corresponding to the at least one beam, and resources corresponding to different beams are multiplexed in a frequency division multiplexing manner.

In some embodiments, when a value of the first trigger indication may indicate, when the value is set to a first value, that the assistance information is not to be sent, or indicate, when the value is set to a second value, that the assistance information is to be sent; or a value of the second trigger indication indicates, when the value is set to a first value, that the assistance information is not to be sent, or indicates, when the value is set to a second value, that the assistance information is to be sent.

FIG. 8 is a diagram of a structure of a possible communication apparatus according to an embodiment of this application. The communication apparatus may implement functions of the terminal apparatus or the network apparatus in the foregoing method embodiments. Therefore, beneficial effect of the foregoing method embodiments can also be implemented. In embodiments of this application, the communication apparatus may be the terminal device 110 or the network device 120 shown in FIG. 1A, or may be a module (for example, a chip) used in the terminal device 110 or the network device 120.

As shown in FIG. 8, the communication apparatus 800 includes a processing unit 810, a receiving unit 820, and a sending unit 830. It should be understood that the receiving unit 820 and the sending unit 830 may be integrated into a same unit. To be specific, the receiving unit 820 may be the sending unit 830, and the sending unit 830 may be the receiving unit 820. The communication apparatus may be configured to implement functions of the network apparatus in the method embodiments shown in any one of FIG. 2, FIG. 6, and FIG. 7. In some embodiments, the processing unit may be a processor, the sending unit may be a transmitter, and the receiving unit may be a receiver.

As shown in FIG. 9, a communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement a method in the foregoing method embodiments, the processor 910 is configured to perform a function of the processing unit 910, and the interface circuit 920 is configured to perform functions of the receiving unit 920 and the sending unit 930.

When the communication apparatus is a chip used in the terminal device 110 or the network device 120, the chip of the device implements functions of the terminal device 110 or the network device 120 in the foregoing method embodiments. The chip of the device receives information from another module (for example, a radio frequency module or an antenna) in the terminal device 110 or the network device 120. The information may be sent by another terminal device 110 or network device 120. Alternatively, the chip of the terminal device sends information to another module (for example, a radio frequency module or an antenna) in the network device 120 or the terminal device 110. The information is sent to another terminal device 110 or network device 120.

It should be noted that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic component, a transistor logical device, a hardware component, or a combination thereof. The general-purpose processor may be a microprocessor or any regular processor or the like.

An embodiment of this application provides a communication system. The communication system may include the communication apparatuses, for example, the terminal device 110 or the network device 120, in the embodiment shown in FIG. 8. Optionally, the terminal device 110 or the network device 120 in the communication system may perform the communication method shown in any one of FIG. 2, FIG. 6, and FIG. 7.

An embodiment of this application further provides a circuit. The circuit may be coupled to a memory, and may be configured to perform a procedure related to the terminal device 110 or the network device 120 in any one of the foregoing method embodiments. A chip system may include a chip, and may further include another component, like a memory or a transceiver.

It should be understood that the processor mentioned in embodiments of this application may be a CPU, or may be another general-purpose processor, a digital signal processor (Digital Signal Processor, DSP), an application-specific integrated circuit (Application-Specific Integrated Circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include, but is not limited to, these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments applied in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, reference may be made to a corresponding process in the foregoing method embodiments. Details are not described herein again.

In the several embodiments provided in this application, it should be understood that the disclosed communication method and apparatus may be implemented in other manners. For example, the described apparatus embodiments are merely examples. For example, division into the modules is merely logical function division and there may be other division during actual implementation. For example, a plurality of modules or components may be combined or integrated into another system, or some features may be omitted or not performed. In addition, the displayed or discussed mutual couplings, direct couplings, or communication connections may be implemented through some interfaces. The indirect couplings or communication connections between the apparatuses or units may be implemented in electronic, mechanical, or another form.

The modules described as separate parts may or may not be physically separate, and parts displayed as modules may or may not be physical modules, may be located in one location, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solution of this application essentially, or the part with contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. This is used as an example but is not limited to: The computer-readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM), a universal serial bus flash disk (Universal Serial Bus Flash Disk), a removable hard disk, or another optical disc storage, a magnetic disk storage medium or another magnetic storage device, or any other medium that can be used to carry or store expected program code in a form of an instruction or a data structure and that can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A method, wherein the method is applicable to a terminal device, and comprises:
receiving a trigger signal, wherein the trigger signal is used to trigger the terminal device to send assistance information to a network device; and
sending the assistance information in response to receiving the trigger signal, wherein the assistance information indicates at least one beam in a plurality of beams of the network device, and the terminal device is in an idle state or an inactive state.

2. The method according to claim 1, further comprising:
receiving a response signal for the assistance information.

3. The method according to claim 1 or 2, wherein the assistance information is sent via at least one of the following:
a radio resource control RRC message; or
a preamble sequence.

4. The method according to claim 3, wherein the assistance information is sent via the RRC message, and the assistance information comprises an index of the at least one beam.

5. The method according to claim 3 or 4, wherein the assistance information is sent via the RRC message, and the assistance information further comprises at least one of the following:
a cause value, indicating that a reason for sending the RRC message is that the trigger signal is received; or
an identifier ID of the terminal device.

6. The method according to claim 4 or 5, wherein the response signal is received via at least one of the following:
an RRC reject message, wherein the RRC reject message comprises a reject cause value, and the reject cause value indicates a response to the RRC message comprising the assistance information;
an RRC release message, wherein the RRC release message comprises a release cause value, and the release cause value indicates a response to the RRC message comprising the assistance information; or
an RRC feedback message, wherein the RRC feedback message indicates a response to the RRC message comprising the assistance information.

7. The method according to claim 3, wherein the assistance information is sent via the preamble sequence, and the preamble sequence corresponds to a beam in the at least one beam sent by the network device.

8. The method according to claim 7, wherein the response signal is received via a random access response RAR message, the RAR message comprises a first field, and a first value of the first field indicates a response to the assistance information.

9. The method according to claim 1, wherein the trigger signal is carried by a paging message, and the paging message comprises a first trigger indication used to trigger the terminal device to send the assistance information.

10. The method according to any one of claims 1 to 9, wherein the trigger signal is a low-power wake-up signal LP-WUS, and the trigger signal comprises at least one of the following:
a second trigger indication used to trigger the terminal device to send the assistance information; or
a paging group indication.

11. The method according to claim 10, wherein the trigger signal comprises the paging group indication, and the method further comprises:
receiving the paging message, wherein the paging message carries the first trigger indication used to trigger the terminal device to send the assistance information.

12. The method according to claim 1, wherein the trigger signal is received via at least one of the following:
a paging message, comprising an indication used to trigger an ultra-low power consumption communication module to send the assistance information;
an LP-WUS, wherein the LP-WUS is used to trigger the ultra-low power consumption communication module to send the assistance information; or
first ultra-low power consumption signaling, wherein the first ultra-low power consumption signaling is used to trigger the ultra-low power consumption communication module to send the assistance information.

13. The method according to claim 12, wherein the method further comprises:
receiving resource configuration information used for the ultra-low power consumption communication module, wherein the resource configuration information comprises at least one of the following corresponding to the plurality of beams: a time domain resource or a frequency domain resource.

14. The method according to claim 13, wherein the resource configuration information comprises the frequency domain resource corresponding to the at least one beam, and resources corresponding to different beams are multiplexed in a frequency division multiplexing manner.

15. The method according to any one of claims 12 to 14, wherein sending the assistance information comprises:
selecting a target beam from the plurality of beams based on received signal strengths associated with the plurality of beams;
determining, based on the resource configuration information, a resource corresponding to the target beam; and
sending the assistance information on the resource.

16. The method according to any one of claims 1 to 15, wherein
the assistance information comprises the index of the at least one beam, and a received signal strength associated with the at least one beam is greater than or equal to a threshold; or
the assistance information comprises an index of one beam, and the one beam has a strongest received signal strength in the plurality of beams.

17. The method according to any one of claims 1 to 16, wherein
a value of the first trigger indication indicates, when the value is set to a first value, that the assistance information is not to be sent, or indicates, when the value is set to a second value, that the assistance information is to be sent; or
a value of the second trigger indication indicates, when the value is set to a first value, that the assistance information is not to be sent, or indicates, when the value is set to a second value, that the assistance information is to be sent.

18. A method, wherein the method is applicable to a network device, and comprises:
sending a trigger signal, wherein the trigger signal is used to trigger a terminal device to send assistance information to the network device; and
receiving the assistance information, wherein the assistance information indicates at least one beam in a plurality of beams of the network device, and the terminal device is in an idle state or an inactive state.

19. The method according to claim 18, further comprising:
performing, based on the assistance information, adjustment on one or more of the plurality of beams, wherein the adjustment comprises at least one of the following:
disabling the one or more beams; or
adjusting transmit power of the one or more beams.

20. The method according to claim 18 or 19, wherein the trigger signal is sent via at least one of the following:
a paging message;
a low-power wake-up signal LP-WUS; or
first ultra-low power consumption signaling, wherein the first ultra-low power consumption signaling is used to trigger the ultra-low power consumption communication module to send the assistance information.

21. The method according to any one of claims 18 to 20, further comprising:
sending a response signal for the assistance information in response to the assistance information.

22. The method according to any one of claims 18 to 21, wherein the assistance information is received via at least one of the following:
a radio resource control RRC message; or
a preamble sequence.

23. The method according to claim 22, wherein the assistance information is received via the RRC message, and the assistance information comprises an index of the at least one beam.

24. The method according to claim 22 or 23, wherein the assistance information is received via the RRC message, and the assistance information further comprises at least one of the following:
a cause value, indicating that a reason for sending the RRC message is that the trigger signal is received; or
an identifier ID of the terminal device.

25. The method according to claim 23 or 24, wherein the response signal is sent via at least one of the following:
an RRC reject message, wherein the RRC reject message comprises a reject cause value, and the reject cause value indicates a response to the RRC message comprising the assistance information;
an RRC release message, wherein the RRC release message comprises a release cause value, and the release cause value indicates a response to the RRC message comprising the assistance information; or
an RRC feedback message, wherein the RRC feedback message indicates a response to the RRC message comprising the assistance information.

26. The method according to claim 22, wherein the assistance information is received via the preamble sequence, and the preamble sequence corresponds to a beam in the at least one beam sent by the network device.

27. The method according to claim 26, wherein the response signal is sent via a random access response RAR message, the RAR message comprises a first field, and a first value of the first field indicates a response to the assistance information.

28. The method according to any one of claims 18 to 27, wherein the trigger signal is the LP-WUS, and the trigger signal comprises at least one of the following:
a second trigger indication used to trigger the terminal device to send the assistance information; or
a paging group indication.

29. The method according to claim 28, wherein the trigger signal comprises the paging group indication, and the method further comprises:
sending a paging message to a plurality of terminal devices comprising the terminal device, wherein the paging message carries the first trigger indication used to trigger the terminal device to send the assistance information.

30. The method according to any one of claims 18 to 27, wherein the trigger signal is sent via the paging message, and the trigger signal comprises at least one of the following:
a first trigger indication used to trigger the terminal device to send the assistance information; or
an indication used to trigger the ultra-low power consumption communication module of the terminal device to send the assistance information.

31. The method according to claim 18, wherein the method further comprises:
sending resource configuration information used for the ultra-low power consumption communication module, wherein the resource configuration information comprises at least one of the following corresponding to the plurality of beams: a time domain resource or a frequency domain resource.

32. The method according to claim 31, wherein the resource configuration information comprises the frequency domain resource corresponding to the at least one beam, and resources corresponding to different beams are multiplexed in a frequency division multiplexing manner.

33. The method according to any one of claims 18 to 32, wherein
a value of the first trigger indication indicates, when the value is set to a first value, that the assistance information is not to be sent, or indicates, when the value is set to a second value, that the assistance information is to be sent; or
a value of the second trigger indication indicates, when the value is set to a first value, that the assistance information is not to be sent, or indicates, when the value is set to a second value, that the assistance information is to be sent.

34. A communication apparatus, comprising a processor and a memory storing instructions, wherein when the instructions are executed by the processor, the communication apparatus is enabled to perform the following operations:
receiving a trigger signal, wherein the trigger signal is used to trigger the terminal device to send assistance information to a network device; and
sending the assistance information in response to receiving the trigger signal, wherein the assistance information indicates at least one beam in a plurality of beams of the network device, and the terminal device is in an idle state or an inactive state.

35. A communication apparatus, comprising a processor and a memory storing instructions, wherein when the instructions are executed by the processor, the communication apparatus is enabled to perform the following operations:
sending a trigger signal, wherein the trigger signal is used to trigger a terminal device to send assistance information to the network device; and
receiving the assistance information, wherein the assistance information indicates at least one beam in a plurality of beams of the network device, and the terminal device is in an idle state or an inactive state.

36. A chip, wherein the chip comprises a processing circuit, and the processing circuit is configured to perform the method according to any one of claims 1 to 17 or according to any one of claims 18 to 33.

37. A computer-readable storage medium, wherein the computer-readable storage medium stores instructions, and when the instructions are executed by a communication device, the communication device is enabled to perform the method according to any one of claims 1 to 17 or any one of claims 18 to 33.

38. A computer program product comprising instructions, wherein the instructions are run on a communication apparatus, to enable the communication apparatus to perform the method according to any one of claims 1 to 17 or according to any one of claims 18 to 33.

39. A communication apparatus, comprising a processor, wherein the processor is configured to execute instructions or a computer program, to enable the communication apparatus to perform the method according to any one of claims 1 to 33.
